# EUROPEAN PATENT APPLICATION

(11) **EP 4 814 062 A1**
(43) Date of publication of application: **30.09.2026**
(21) Application number: 26165569.0
(22) Date of filing: 17.03.2026
(51) Int. Cl.: C09D 5/00

(54) **HIGH FOAMING AND HIGH GLOSS TIRE DRESSING**

(30) Priority: 27.03.2025 US 202563778628 P; 10.03.2026 US 202619562005
(71) Applicant: Illinois Tool Works Inc., Glenview IL 60025 (US)
(72) Inventor: CHAMPAGNE, Lakia Monique, Glenview, 60025 (US); ESCOTO, Jr. John Isidoro, Glenview, 60025 (US)
(74) Representative: HGF

(57) **Abstract**

A tire dressing formulation is provided that includes a silicone-in-water emulsion, a foaming wetting agent, a surfactant, a pH dependent rheology modifier, and a solvent present as the majority by weight of the formulation. The sprayable tire dressing formulation provides a tire cleaning and develops a uniform and high gloss coating on a treated tire surface.

## Description

### RELATED APPLICATIONS

This application is a non-provisional application that claims priority benefit of US Provisional Application Serial Number 63/778,628, filed 27 March 2025; the contents of which are hereby incorporated by reference.

### FIELD OF THE INVENTION

The present invention in general relates to a tire dressing composition and the use thereof and in particular, to such a composition amenable to application to the tires of various vehicles to provide a durable, high gloss-coating.

### BACKGROUND OF THE INVENTION

Over time, the look of tires can become dull and lose their original appeal and/or luster. The Auto Care industry employs tire dressing products to help restore the look of the tire back to its original appearance and/or add a desirable amount of shine to the surface. Commonly, these tire dressing products are either solvent or aqueous-based. Aqueous-based tire dressings are more often used because they are easier to work with, can easily be cleaned off garage floors or driveways if spilled, and can add a desirable amount of gloss to the tire surface. Often, these tire dressings comprise a surfactant for removing road and dirt grime from the tire, and silicone chemistry of varying viscosities to control the level of shine and durability. Some representative tire dressings in this category include aerosolized foaming water-based products. When these are applied to the tires, the foam is expelled onto the surface and the cleaning mechanism begins. Subsequentially, silicone forms a layer on the surface and gives it a glossy coating. However, with these types of water-based products, the coating can quickly diminish due to centrifugal movement of the tires which causes the product to sling from the tire's surface onto the car body (or the road). When this happens, tires often return to their dull, weathered appearance. Therefore, there is a need for an aerosolized high foaming aqueous-based tire dressing product that can efficiently clean tires and deliver a long-lasting desirable shine, while the amount of sling is minimized or eliminated.

A typical tire dressing composition is a blend of shine components and a hydrocarbon solvent or a conventional oil in water emulsion system based on the shine components to deliver a high gloss coating. The most important design and performance characteristics observed in optimized sprayable common tire dressing compositions are high gloss and wettability on tires which develop a uniform coating on the treated tire surface with high gloss on treated tires.

For example, conventionally a dispersion of the silicone fluids in petroleum distillates or a conventional oil in water silicone emulsion system with milky or opaque appearance are often used to restore the attractive, bright, shiny, and like-new appearance on the tire surface. Typically, conventional tire dressing formulas for dressing and appearance applications tend to have limited adhesion to the rubber of the tire. Ideally, a product has the long-term performance characteristics of being resistant to car wash detergents and weathering, such as rain and storm. Unfortunately, conventional products remain difficult for a consumer to apply and do not provide the balance of desired properties. To-date, tire dressing products have involved a trade-off of properties with low viscosity film forming polymers tending to be vulnerable to weathering, sag, and tack during drying; while higher molecular weight film forming polymers tend to be brittle and delaminate.

Thus, there exists a need for a tire dressing composition that is sufficient consistency to be applied to tire surfaces and has durability against weather and detergent. There also exists a need for a process to apply such a composition to provide a high gloss protective dressing coating to a tire surface.

### SUMMARY OF THE INVENTION

A tire dressing formulation is provided that includes a silicone-in-water emulsion, a foaming wetting agent, a surfactant, a pH dependent rheology modifier, and a solvent present as the majority by weight of the formulation. The sprayable tire dressing formulation provides a tire cleaning and develops a uniform and high gloss coating on a treated tire surface.

The formulation lifts grime from a tire surface with little or no manual scrubbing and results in a high gloss finish.

### BRIEF DESCRIPTION OF THE DRAWINGS

The invention is further detailed with respect to the following drawings that depict exemplary aspects of the invention.
FIGS. 1A-1D is a series of photograph of a dry and dirty tire (FIG. 1A), the tire with 2 spray rotations of an inventive formulation in a foamed state on a tire sidewall (FIG. 1B), after a few minutes as the foam breaks down (FIG. 1C), and one hour after application of the inventive formulation to yield a high shine coating on the tire sidewall (FIG. 1D);
FIG. 2 is a magnified photograph of the tire depicted in FIG. 1C after a few minutes showing the lifting of debris from the tire sidewall without manual wiping and visible on top of the foam;
FIG. 3A is a photograph of a tire before application of an inventive formulation; and
FIG. 3B is a photograph of the tire of FIG. 3A, after spraying the foam therefrom and drying to a glossy high shine appearance.

### DETAILED DESCRIPTION OF THE PREFERRED EMBODIMENTS

This present invention relates to an aerosolized novel surfactant polymer water-based tire dressing composition. The unique aerosolized spray allows the product to reach different textured surfaces of the tire. The surfactant promotes high-foaming and efficient product contact, resulting in sufficient tire cleaning. The surfactant/polymer combination helps the silicone cling to and spread uniformly on the tire surface, thus limiting product sling. This surfactant polymer combination also enables the user to build a desirable level of shine. The use of this type of tire dressing results in less product run-off from the tire surface, leading to a less messy job after clean-up.

It is to be understood that in instances where a range of values are provided, for example with respect to a weight percentage range of a composition component, that the range is intended to encompass not only the end point values of the range but also intermediate values of the range as explicitly being included within the range and varying by the last significant figure of the numeral. By way of example, a recited range of from 1 to 4 is intended to include 1-2, 1-3, 2-4, 3-4, and 1-4.

Unless otherwise defined, all technical and scientific terms used herein have the same meaning as commonly understood by one of ordinary skill in the art to which this invention belongs. The terminology used in the description of the invention herein is for the purpose of describing particular embodiments only and is not intended to be limiting of the invention.

Unless indicated otherwise, explicitly or by context, the following terms are used herein as set forth below.

As used in the description of the invention and the appended claims, the singular forms "a," "an" and "the" are intended to include the plural forms as well, unless the context clearly indicates otherwise.

Also as used herein, "and/or" refers to and encompasses any and all possible combinations of one or more of the associated listed items, as well as the lack of combinations when interpreted in the alternative ("or").

As used herein, "high shine" in the context of a dried inventive tire dressing refers to a surface gloss of at least 55 gloss units (GU) at 20° value per ASTM D523.

As used herein, "high foam" in the context of an applied inventive tire dressing refers to foaming of greater than or equal to 600mL as measured by experimental lab foam beaker tests.

An inventive tire dressing has the properties of generating a high foam that adheres to a horizontal tire wall surfaces with sufficient surfactancy to lift road grime and dirty away from the tire wall with limited or no manual pressure and provide a clean, high gloss shine to the tire surface.

An inventive tire dressing composition achieves these attributes through inclusion of a silicone-in-water emulsion. A silicone-in-water emulsion operative herein is readily formed according to conventional techniques and is commercially available. Suitable silicone-in-water emulsions operative herein are detailed in for example US 4,221,688; US 4,504,549; and 4, 535,109. A typical silicone-in-water emulsion per the present invention has a viscosity between 50 - 3,000,00 cSt. In some inventive embodiments, the silicone is elastomeric. The emulsion is between 1 and 90 percent by weight silicone with stabilizing surfactant and a majority phase of water. Upon drying, a hydrophobic film results that imparts a wet look to an unaided, normal, human eye. Typically, the silicone-in-water emulsion is present from 1 to 80 total percent.

Water contained within emulsions as a carrier for the emulsion or other components is not counted toward total amounts of water in the following tables or the appended claims. A silicone-in-water emulsion operative herein is typically between 0.5% to 20% by weight of a cationic or anionic emulsifier as the main emulsifier in the silicone-in-water emulsion, up to 90 % by weight of a silicone (synonymously referred to herein as a siloxane) in dispersed phase. The siloxane is liquid at 25° C and has units according to formula (I):

R¹ₙSiO_{4-m/2} (I)

where R¹ is C₁-C₆ alkyl, or C₀-C₆ alkyl hydroxyl groups and n has a value of from 0 to 3 and the cationic or anionic emulsifier lacks a halogen containing counter ion.

Other siloxanes operative in the reactive silicone-in-water emulsion include linear siloxanes of the general formula (II):

R²-(SiO(R²)₂)ₙ-(SiO(R³)ₐR²₂₋ₐ)_{z}-SiR²₃ (II)

where R² is C₁-C₂₀ alkyl, C₂-C₁₈ alkyl, or C₆-C₂₀ alkyl, and R³ is a siloxane side chain (III):

-O-(SiO(R²)₂)ₙSiR²₃ (III)

where n is an integer with a value of from 0 to 100,000; a is an integer with a value of from 0 to 2, inclusive; and z is an integer with a value of from 0 to 100, inclusive.

The reactive siloxane emulsions have a dynamic viscosity of from 1 to 1,000,000 mPa·s at 25°C. Exemplary reactive siloxanes include polydihydrocarbyl siloxane; polydimethyl siloxanes; polydimethyl polymethyl phenyl siloxanes such as cyclic polydimethyl siloxanes; linear siloxanes such as α,ω silanol end-blocked polydimethyl siloxane, α,ω trimethyl silyl end-blocked polydimethyl siloxane, dimethyl siloxane methyl phenyl siloxane copolymers, dimethyl siloxane methyl alkyl (C₁₂-₁₈) siloxane copolymers; branched siloxane polymers; and vinyldimethyl silyl end-blocked polydimethyl siloxanes; or combinations thereof. Cyclic polydimethyl siloxanes operative herein include octamethyl cyclotetrasiloxane and decamethyl cyclopentasiloxane.

Emulsification of the reactive siloxane occurs using the cationic surfactant. Examples of suitable cationic surfactants include fatty acid methylammonium methosulphate, fatty acid methylammonium ethosulphate, fatty acid methylammonium acetate. Other suitable surfactants operative herein illustratively include nonionic ethoxylated fluorinated surfactants, polyether modified polydimethylsiloxane, polyether modified polymethylalkylsiloxane, aralkyl modified polymethylalkylsiloxane, polyester modified hydroxyl functional polydimethylsiloxane, acryl functional polyester modified polydimethylsiloxane, polyether polyester modified hydroxyl functional polydimethylsiloxane, solution of polyacrylate, solution of a fluoro modified polyacrylate, polymeric fluorinated, ethoxylated alcohol, ethoxylated fatty acid, sorbitan ester, ethoxylated castor oils, alkyl polysaccharides, sorbitan monostearate, sorbitan monolaurate, sorbitan oleate, polyoxyethylene sorbitan, polyoxyethylene sorbitan fatty acid ester, polyoxyethylene sorbitan monooleate surfactants; or anionic phosphonated fluorinated, phosphate ester, aliphatic phosphate ester; or cationic ethoxylated fatty ammonium ethosulphate, ethoxylated alkyl amine surfactants. A surfactant, if present, is included in amounts of up to 5 total weight percent and in other embodiments from 0.05 to 1 total percent.

Pre-formed silicone-in-water emulsions of amino functional silicone are also commercially available.

An inventive tire dressing composition in some embodiments includes a wetting agent in an amount present to impart a high gloss to a tire surface dress coating so produced by the inventive composition. Wetting agents operative herein illustratively include amphoteric polyfluoroalkyl betaine surfactant, nonionic polymeric fluorinated surfactants, anionic phosphonated fluorinated surfactants, nonionic ethoxylated fluorinated surfactants, sodium laureth sulfate, sodium lauryl sulfate, C₈-₂₈ alkyl betaine and C₈-₂₈ alkyl amido betaines; decyl glucoside, cocamidopropylamine oxide, sodium cocoamphoacetate, C₈-₁₆ alkyl polyglycosides, linear alcohol ethoxylates, or a combination thereof. Typically, the wetting agent is present from 0 to 40 total percent, while in some other embodiments is present from 0 to 60 total weight percent. In some embodiments of the present invention, a wetting agent or combination of wetting agents are selected that also have a tendency to foam to create a high foam layer on a side wall of a tire upon application thereto. It is also appreciated that these wetting agents also impart a degree of surfactancy to the formulation to facilitate lifting soil, grime, and common adherents from a tire side wall. Once lifted from the tire surface, the freed debris and grime tends to lift on the foam.

Besides the aforementioned wetting agent, a surfactant is present that predominantly acts as a cleaning agent to boost cleaning of the surface of the tire. According to embodiments, the surfactant is selected from a variety of anionic, cationic, non-ionic, amphoteric, and alcohol ethoxylate surfactants. According to embodiments, surfactants operative herein illustratively include nonionic ethoxylated fluorinated surfactants, polyether modified polydimethylsiloxane, polyether modified polymethylalkylsiloxane, aralkyl modified polymethylalkylsiloxane, polyester modified hydroxyl functional polydimethylsiloxane, acryl functional polyester modified polydimethylsiloxane, polyether polyester modified hydroxyl functional polydimethylsiloxane, solution of polyacrylate, solution of a fluoro modified polyacrylate, polymeric fluorinated, ethoxylated alcohol, ethoxylated fatty acid, sorbitan ester, ethoxylated castor oils, alkyl polysaccharides, sorbitan monostearate, sorbitan monolaurate, sorbitan oleate, polyoxyethylene sorbitan, polyoxyethylene sorbitan fatty acid ester, polyoxyethylene sorbitan monooleate surfactants; or anionic phosphonated fluorinated, phosphate ester, aliphatic phosphate ester; or cationic ethoxylated fatty ammonium ethosulphate, ethoxylated alkyl amine; or combinations of any of the aforementioned. Specific non-ionic surfactants operative herein illustratively include lauramidopropylamine oxide, myristamidopropylamine oxide, a mixed lauramidopropylamine and myristamidopropylamine oxide, C₉-₁₁ ethoxylated alcohols having EO values from 2.5 - 9, or combinations thereof. In some inventive embodiments, EO 2.5 C₉-₁₁ ethoxylated alcohol is used in combination with one or more EO 6-9 C₉-₁₁ ethoxylated alcohols. The ratio of EO 2.5: EO 6-9 C₉-₁₁ ethoxylated alcohols being between 0.1-1:1. The second surfactant is present in an amount of 0 to 40 total weight percent. According to some inventive embodiments, the second surfactant is a C₉-₁₁ ethoxylated alcohols having EO values from 2.5 - 12 and present in an amount 0 to 50 total weight percent.

The rheology modifier typically amounts to 0 to 20 total weight percent of an inventive formulation. A rheology modifier operative herein illustratively includes a carboxymethylcellulose; or an acrylic co-polymer, such as an alkali-swellable emulsion (ASE) or a hydrophobically modified, alkali-swellable emulsion (HASE) or a high molecular weight starch or a polyvinyl alcohol. In this context high molecular weight is a number average molecular weight of between 50 kiloDaltons and 1,000 kiloDaltons. The details of exemplary rheology modifiers are detailed in US Patent Nos. 5,874,495; and 5,916,967. The inclusion of a rheology modifier in the present invention provides pH sensitive thickening to an inventive formulation. As a result, adhesion of an inventive formulation to a vertical surface, such as a tire side wall in enhanced. This attribute is commonly referred to in the industry as a formulation having "low sling". Low sling tire dressing refers to products and application techniques that minimize or prevent the tire dressing from splashing or "slinging" onto the vehicle's bodywork, wheels, or fender liners.

An inventive tire dressing composition in some embodiments includes a corrosion inhibitor. A corrosion inhibitor, if present is included in amounts of up to 5 total weight percent and in other embodiments from 0.1 to 3 total percent. Corrosion inhibitors operative herein illustratively include amine and alkali carboxylates, phosphate esters, borates, amphoterics, such as the above-noted betaine type surfactants and imidazolines; molybdenates, mercaptobenzothiazole, benzoates, thioureas, hydrazines, phenols, oxazines, or combinations thereof. To the extent that a previously detailed substance, such as a wetting agent, imparts corrosion resistance, the amount of that substance is already accounted for when determining weight percentages.

An inventive tire dressing composition in some embodiments includes a fragrance. A fragrance, if present is included in amounts of up to 5 total weight percent and in other embodiments from 0.1 to 3 total percent. Exemplary fragrances include citrus, pine, floral, musk, or fruits, such as cherry or lemon. Fragrances are often associated with water miscible terpenes, esters and/or ketones.

An inventive tire dressing composition in some embodiments includes a pigment such as iron oxide, mica, titanium dioxide, stannic oxide, metallic glitter particles such as pigmented polyethylene terephthalate, cut metalized foils such as aluminized PVC film or the like. A pigment, if present, is included in amounts of up to 1 total weight percent and in other embodiments from 0 to 0.5 total percent.

An inventive tire dressing composition in some embodiments includes a biocide. A biocide operative herein illustratively includes 2-methyl - 4 - isothiazoline - 3 - one, methylchloroisothiazolinone/2-methyl-4 -isothiazoline-3-one, 1, 2 - benzisothiazolinone/dipropylene glycol, sodium hydroxymethylglycinate, poly hexamethylene biguanide hydrochloride, caprylyl glycol/phenoxyethanol/hexylene glycol. A biocide, if present, is included in amounts of up to 1 total weight percent and in other embodiments from 0.1 to 0.5 total percent.

An inventive tire dressing composition in some embodiments includes an ultraviolet (UV) light stabilizer. A UV light stabilizer operative herein illustratively includes benzotriazoles, benzophenones and organic nickel compounds. A UV light stabilizer, if present, is included in amounts of up to 2 total weight percent and in other embodiments from 0.1 to 0.5 total percent.

The components of an inventive tire dressing composition are solvated to dissolve in a solvent to yield a colored or clear solution. The solvent of the present invention is ideally water, and in some inventive embodiments distilled water or even deionized water to provide batchwise consistency. The solvent constituting the majority by weight of an inventive formulation. In some inventive embodiments, a cosolvent is provided to enhance solubility and storage stability. Cosolvents operative herein are water miscible and include C₁-C₆ alcohols, glycols, C₃-C₆ diols, furans, acetone, acetonitrile, or combinations thereof. In some inventive embodiments, the cosolvent is classified by the US Environmental Protection Agency as a non-VOC.

An inventive tire dressing composition is readily applied by a vehicle owner through resort to a convention trigger spray application, propellant aerosol, or a sponge or cloth for wipe application onto the tire surface.

An inventive tire dressing composition has a fully formulated viscosity of between 150 and 550 cP as measured at 20°C.

An inventive formulation optionally includes a halocarbon or hydrocarbon propellant in instances when an aerosol delivery system of an inventive composition is desired. Aerosol propellants operative herein illustratively include difluoroethane, trifluoroethane; alkanes such as butane, pentane, isobutane; propane; ethers such as dimethyl ether and diethyl ether; nitrogen; carbon dioxide; and combinations thereof. The resultant composition inclusive of a propellant is sealed within a conventional metal aerosol canister and applied by spray application as is conventional to the art.

Typical and preferred compositions according to the present invention are provided in Table 1.

**Table 1. Inventive Water-Based Thickened Tire Dressing Composition (amounts in total weight)**

| Ingredient | Typical | Preferred, if present |
|---|---|---|
| Silicone-in-water emulsion (% in water) | 10-40 | 10-50 |
| Foaming wetting agent | 0-30 | 1-10 |
| Surfactant(s) | 0-30 | 1-10 |
| pH dependent rheology modifier | 0-3 | 0.05-5 |
| Corrosion inhibitor(s) | 0-5 | 0.1-3 |
| UV light stabilizer | 0-1 | 0.01-1 |
| Fragrance | 0-5 | 0.1-3 |
| Pigment | 0-3 | 0.1-1 |
| Cosolvent | 0-5 | 1-10 |
| Propellent | 0-25 | 2-10 |
| Solvent | to 100% | to 100% |

The present invention is further detailed with respect to the following nonlimiting examples that are provided to further illustrate the preparation of inventive formulations and certain attributes associated with the resulting coatings on tire surfaces.

### EXAMPLES

### Example 1

The following formulations where determined to provide formulations that form a durable high gloss water repellant coating. The fully solvated formulations are emulsions and provided with an artificial odor from the fragrance.

### Inventive formulation 1

| Ingredient | Wt. % |
|---|---|
| Ro/DI Water | 53.5% |
| Sodium benzoate | 0.5% |
| Linear Alcohol EO | 6.0% |
| Polyether-modified silicone | 1.0% |
| Alkyl polyglucoside | 4.0% |
| Silicone polymer emulsion 1 | 19.7% |
| Silicone polymer emulsion 2 | 3.0% |
| Acrylic Polymer | 1.0% |
| Polydimethylsiloxane | 3.0% |
| Benzotriazole Polymer | 0.1% |
| Phosphoric acid butyl ester | 1.0% |
| Benzaldehye, diethyl phthalate, acetophenone, ethyl butyrate, pentyl acetate, coumarin, benzyl acetate, ethyl methylphenylglycidate, piperonal, butylated hydroxyltoulene, cedarwood oil-Virginian (fragrance mixture) | 0.1% |
| Tetraydro-1,4-oxazine | 0.1% |
| Isobutane, propane, petroleum gases, liquified | 7.00% |

### Inventive formulation 2

| **Ingredients** | **Weight (%)** |
|---|---|
| Ro/DI Water | 57.5% |
| Sodium benzoate | 0.6% |
| Linear Alcohol EO | 6.0% |
| Polyether-modified silicone | 1.0% |
| Silicone polymer emulsion 1 | 19.8% |
| Acrylic Polymer | 1.0% |
| Polydimethylsiloxane | 6.0% |
| Benzotriazole Polymer | 0.1% |
| Phosphoric acid butyl ester | 1.0% |
| Isobutane, propane, petroleum gases, liquified | 7.00% |

### Inventive formulation 3

| **Ingredients** | **Weight (%)** |
|---|---|
| Ro/DI Water | 55% |
| Linear Alcohol EO | 6.0% |
| Alkyl polyglucoside | 4.0% |
| Silicone polymer emulsion 2 | 22.7% |
| Acrylic Polymer | 1.0% |
| Polydimethylsiloxane | 4.0% |
| Benzotriazole Polymer | 0.1% |
| Benzaldehye, diethyl phthalate, acetophenone, ethyl butyrate, pentyl acetate, coumarin, benzyl acetate, ethyl methylphenylglycidate, piperonal, butylated hydroxyltoulene, cedarwood oil-Virginian (fragrance mixture) | 0.1% |
| Tetraydro-1,4-oxazine | 0.1% |
| Isobutane, propane, petroleum gases, liquified | 7.00% |

### Inventive formulation 4

| **Ingredients** | **Weight (%)** |
|---|---|
| Ro/DI Water | 54.4% |
| Sodium benzoate | 0.5% |
| Linear Alcohol EO | 7.0% |
| Polyether-modified silicone | 1.0% |
| Alkyl polyglucoside | 6.0% |
| Silicone polymer emulsion 1 | 16.7% |
| Silicone polymer emulsion 2 | 9.1% |
| Benzotriazole Polymer | 0.1% |
| Phosphoric acid butyl ester | 1.0% |
| Benzaldehye, diethyl phthalate, acetophenone, ethyl butyrate, pentyl acetate, coumarin, benzyl acetate, ethyl methylphenylglycidate, piperonal, butylated hydroxyltoulene, cedarwood oil-Virginian (fragrance mixture) | 0.1% |
| Tetraydro-1,4-oxazine | 0.1% |
| Isobutane, propane, petroleum gases, liquified | 4.00% |

### Example 2

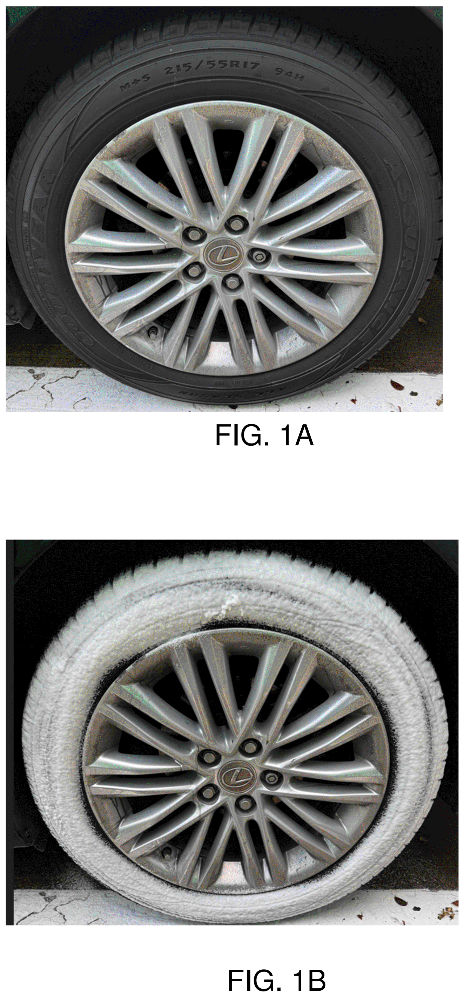

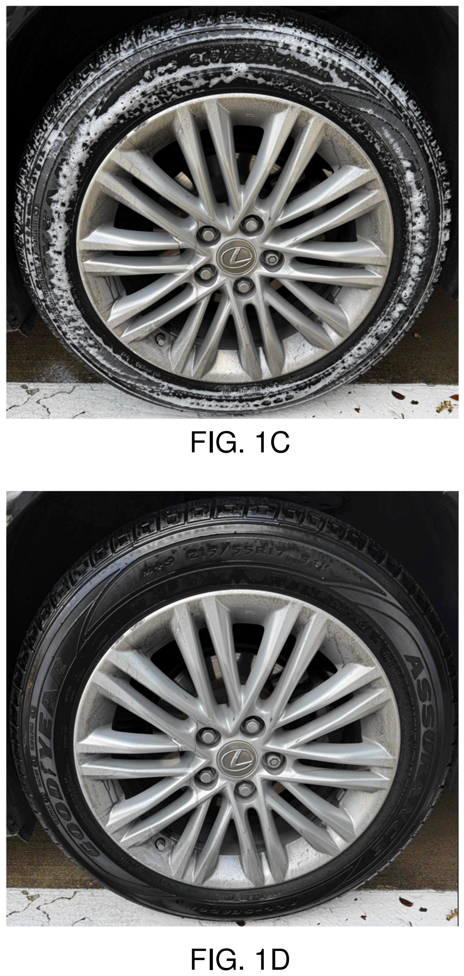

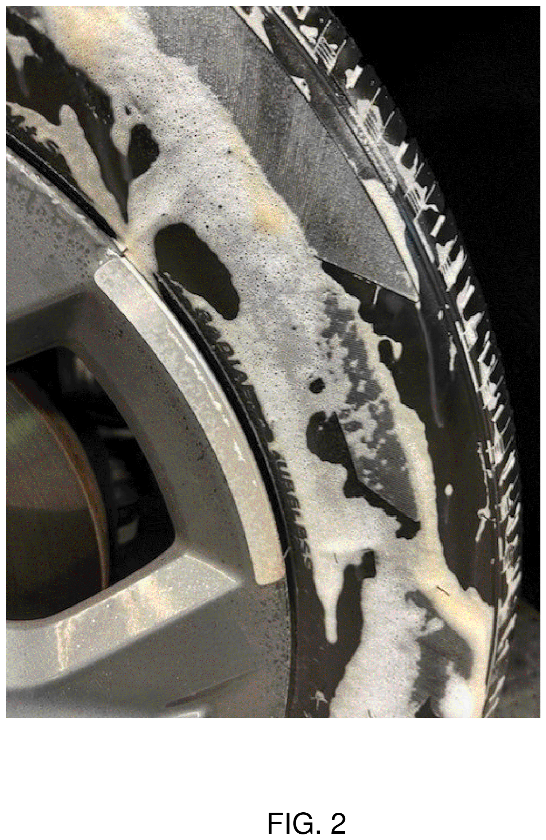

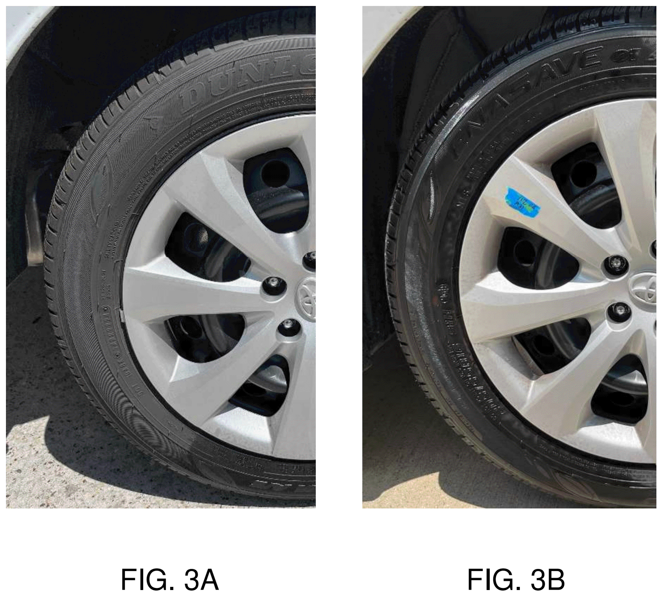

Inventive formulation 2 is spray applied evenly on various aged and new auto tires at 20°C and allowed to dry to the touch. The test results showed:
foam cling to the side all surface of a tire as shown in the sequence of FIGS. 1A-1D;
dirt/road grim removal from a tire side wall, as evidence by the brown residue in the foam, as shown in FIG. 1C and the magnified view thereof, FIG. 2;
appearance revitalization tires from a matte look prior to application (FIG. 3A) to a high gloss finish (FIG. 3B).

Patents and publications mention the specification are indicative of the levels of those skilled in the art to which the invention pertains. These patents and publications are incorporated herein by reference to the same extent as if each individual patent or publication was specifically and individually incorporated herein by reference.

The forgoing description is illustrative of particular embodiments of the invention, but is not meant to be a limitation upon the practice thereof. The following claims, including all equivalents thereof are intended to define the scope of the invention.

## Claims

1. A tire dressing formulation comprising:
a silicone-in-water emulsion;
a foaming wetting agent;
a surfactant;
a pH dependent rheology modifier; and
a solvent present as the majority by weight of the formulation.

2. The tire dressing formulation of claim 1 wherein said silicone-in-water emulsion is present from 1 to 80 total weight percent.

3. The tire dressing formulation of claim 1 wherein said foaming wetting agent is present from 0 to 40 total weight percent.

4. The tire dressing formulation of claim 1 wherein said foaming wetting agent is an amphoteric polyfluoroalkyl a betaine surfactant, a nonionic polymeric fluorinated surfactants, an anionic phosphonated fluorinated surfactant, a nonionic ethoxylated fluorinated surfactants, sodium laureth sulfate, sodium lauryl sulfate, a C₈-₂₈ alkyl betaine, a C₈-₂₈ alkyl amido betaine; decyl glucoside, cocamidopropylamine oxide, sodium cocoamphoacetate, a C₈-₁₆ alkyl polyglycoside, linear alcohol ethoxylate, any amphoteric, or a combination thereof.

5. The tire dressing formulation of claim 1 wherein said foaming wetting agent comprises C₈-₁₆ alkyl polyglycoside.

6. The tire dressing formulation of claim 1 wherein said surfactant comprises C₉-₁₁ ethoxylated alcohols having EO values from 2.5 - 9.

7. The tire dressing formulation of claim 1 wherein said pH dependent rheology modifier is present from 0 to 20 total weight percent.

8. The tire dressing formulation of claim 1 wherein said pH dependent rheology modifier is carboxymethylcellulose, an alkali-swellable emulsion, a hydrophobically modified, alkali-swellable emulsion, a high molecular weight starch or a high molecular weight polyvinyl alcohol.

9. The tire dressing formulation of claim 1 further comprising a corrosion inhibitor.

10. The tire dressing formulation of claim 9 wherein said corrosion inhibitor is present from 0.1 to 3 total weight percent.

11. The tire dressing formulation of claim 9 wherein said corrosion inhibitor is an amine- or alkali-carboxylates, a phosphate ester, a borate, an imidazoline; a molybdenate, mercaptobenzothiazole, a thiourea, a hydrazine, a phenol, oxazines, or combinations thereof.

12. The tire dressing formulation of claim 1 further comprising at least one of a biocide, UV light inhibitor, a fragrance, or a combination thereof.

13. The tire dressing formulation of claim 1 wherein the formulation has a viscosity of between 150 to 550 cP as measured at 20°C.

14. A tire comprising:
a coating formed of dried formulation of claim 1;
said coating being on a surface of the tire and having a shine of up to 55 gloss units.
